# EUROPEAN PATENT APPLICATION

(11) **EP 4 656 435 A1**
(43) Date of publication of application: **03.12.2025**
(21) Application number: 24178357.0
(22) Date of filing: 28.05.2024
(51) Int. Cl.: B60K 35/10, B60K 35/80, B60R 16/023

(54) **A COMPUTER SYSTEM CONFIGURED TO, AND A COMPUTER IMPLEMENTED METHOD, TO PROVIDE AN ECONOMIC MODE ADAPTED TO A DRIVER IN A VEHICLE, AND A VEHICLE COMPRISING THE SAME**

(71) Applicant: VOLVO TRUCK CORPORATION, 405 08 Göteborg (SE)
(72) Inventor: BRUN, Arnaud, 69007 Lyon (FR); QUIBRIAC, Yann, 69007 Lyon (FR); SEVENIER, Fanette, 69690 Courzieu (FR)
(74) Representative: Germain Maureau

(57) **Abstract**

A computer system (100) configured to provide an economic mode, i.e. an ECO mode, adapted to a driver in a vehicle, the computer system (100) comprising processing circuitry (102) configured to monitor (201) an action of the driver on at least one component among a set of components which may be actioned by the driver in the vehicle, the action on the at least one component being directed to control a service to be provided in the vehicle when said at least one component is in an activated mode, and having no effect when said at least one component is in an inactivated mode, the processing circuitry (102) being further configured to activate (203) the ECO mode wherein the at least one component in the inactivated mode, based on determining (202) that the at least one component is not actioned by the driver in at least one external condition, and that the at least one component in activated mode is energy consuming.

## Description

### TECHNICAL FIELD

The disclosure relates generally to automatic energy saving of low voltage network, according to driver usage. In particular aspects, the disclosure relates to a computer-implemented method to save energy consumed in a vehicle according to a driver usage. The disclosure can be applied to heavy-duty vehicles, such as trucks, buses, and construction equipment, among other vehicle types. Although the disclosure may be described with respect to a particular vehicle, the disclosure is not restricted to any particular vehicle.

### BACKGROUND

Saving vehicles energy could improve autonomy of the vehicle, both in driving or in living conditions.

Many functions are installed in vehicles, but depending on the driver habits, some functions are sometimes never used or used only in specific conditions depending for example on the type of road, external temperature, location, etc..

For example, such functions may be used only on the highway, only when the temperature is below 10°, or only on specific location areas, etc...

Many vehicles are equipped with an economic mode, or"ECO" mode, which is used to save energy, i.e. electricity or fuel. This "ECO" mode can be deactivated thanks to an "ECO OFF" switch.

There is a need to automatically adapt the economic mode to the drivers' habits.

### SUMMARY

According to a first aspect of the disclosure, the disclosure relates to a computer system configured to provide an economic mode, i.e. an ECO mode, adapted to a driver in a vehicle, the computer system comprising processing circuitry configured to monitor an action of the driver on at least one component among a set of components which may be actioned by the driver in the vehicle, the action on the at least one component being directed to control a service to be provided in the vehicle when said at least one component is in an activated mode, and having no effect when said at least one component is in an inactivated mode, the processing circuitry being further configured to activate the ECO mode wherein the at least one component in the inactivated mode, based on determining that the at least one component is not actioned by the driver in at least one external condition, and that the at least one component in activated mode is energy consuming.. The first aspect of the disclosure may seek to automatically adapt the economic mode to the driver's habits. A technical benefit may include lowering the energy consumption of a low voltage network according to a driver's usage.

Optionally in some examples, including in at least one preferred example, the external condition comprises one of a type of road, a time, a temperature out of the vehicle, a location of the vehicle, a speed of the vehicle. A technical benefit may include lowering the energy consumption of a low voltage network according to a driver's usage depending on external conditions.

Optionally in some examples, including in at least one preferred example, the processing circuitry is further configured to continuously monitor actions of the driver on the at least one component and to identify a subset of components among said set of components, a component being included in the identified subset of components if said component is not actioned by the driver in at least one external condition, and if said component in activated mode is energy consuming, said component included in the identified subset being inactivated, when the ECO mode is activated.. A technical benefit may include continuously improving the optimization according to driver usage possible evolutions.

Optionally in some examples, including in at least one preferred example, the processing circuitry is further configured to associate the identified subset to the driver, and to compare a new identified subset associated to a new driver with at least one identified subset associated to at least one driver, to predict a predicted subset associated to the new driver, the predicted subset including components which will not be actioned in the future by the new driver in at least one external condition. A technical benefit may include learning, from a population of drivers, and predict future driver usage.

Optionally in some examples, including in at least one preferred example, the at least one identified subset associated to at least one driver comprises at least two identified subsets and wherein the prediction is based on similarities between the at least two identified subsets.

Optionally in some examples, including in at least one preferred example, the processing circuitry is further configured to deactivate the ECO mode, so that the at least one component, or the components in the identified subset, are in the activated mode.

According to a second aspect of the disclosure, the disclosure relates to a vehicle comprising the computer system according to anyone of the example computer system described above, and the set of components which may be actioned by the driver in the vehicle, the action on the at least one component being directed to control a service to be provided in the vehicle when said at least one component is in an activated mode, and having no effect when said at least one component is in an inactivated mode.. The second aspect of the disclosure may seek to automatically adapt the economic mode to the vehicle driver's habits. A technical benefit may include facilitating optimization of low voltage network energy consumption according to driver usage, and to reduce energy consumption by the vehicle.

Optionally in some examples, including in at least one preferred example, the at least one component is one of a hardware component and a software component.

Optionally in some examples, including in at least one preferred example, the hardware component is one of a freewheel, a switch, and a stalk.

Optionally in some examples, including in at least one preferred example, the software component comprises an interactive application displaying virtual switches on an interactive screen.

According to a third aspect of the disclosure, the disclosure relates to a computer-implemented method configured to provide an economic mode, i.e. an ECO mode, adapted to a driver in a vehicle, the method being implemented by a processing circuitry of a computer system, and comprising:
- monitoring an action of the driver on at least one component among a set of components which may be actioned by the driver in the vehicle, the action on the at least one component being directed to control a service to be provided in the vehicle when said at least one component is in an activated mode, and having no effect when said at least one component is in an inactivated mode,
- determining that the at least one component is not actioned by the driver in at least one external condition, and that the at least one component in activated mode is energy consuming,
- implementing the ECO mode by setting the at least one component in the inactivated mode.

Optionally in some examples, including in at least one preferred example, the computer-implemented method further comprises identifying a subset of components among said set of components, a component being included in the identified subset of components if said component is not actioned by the driver in at least one external condition, and if said component in activated mode is energy consuming, said component included in the identified subset being inactivated, when the ECO mode is activated.

Optionally in some examples, including in at least one preferred example, the computer-implemented method further comprises:
- associating the identified subset to the driver,
- comparing a new identified subset associated to a new driver with at least one identified subset associated to at least one driver, to predict a predicted subset associated to the new driver, the predicted subset including components which will not be actioned in the future by the new driver in at least one external condition.

Optionally in some examples, including in at least one preferred example, the at least one identified subset associated to at least one driver comprises at least two identified subsets and wherein the prediction is based on similarities between the at least two identified subsets.

Optionally in some examples, including in at least one preferred example, the computer-implemented method further comprises deactivating the ECO mode, so that the at least one component, or the components in the identified subset, are in the activated mode.

According to a fourth aspect of the disclosure, the disclosure relates to a computer program product comprising program code for performing, when executed by the processing circuitry, the computer-implemented method of any of the examples described above.

According to a fifth aspect of the disclosure, the disclosure relates to a non-transitory computer-readable storage medium comprising instructions, which when executed by the processing circuitry, causes the processing circuitry to perform the computer-implemented method of any of the examples described above.

The disclosed aspects, examples (including any preferred examples), and/or accompanying claims may be suitably combined with each other as would be apparent to anyone of ordinary skill in the art. Additional features and advantages are disclosed in the following description, claims, and drawings, and in part will be readily apparent therefrom to those skilled in the art or recognized by practicing the disclosure as described herein.

There are also disclosed herein computer systems, control units, code modules, computer-implemented methods, computer readable media, and computer program products associated with the above discussed technical benefits.

### BRIEF DESCRIPTION OF THE DRAWINGS

Examples are described in more detail below with reference to the appended drawings.
**FIG. 1** is a schematic diagram of an exemplary computer system for implementing examples disclosed herein, according to an example.
**FIG. 2** is a flow chart of an exemplary method to provide an economic mode adapted to a driver in a vehicle according to an example.
**FIG. 3** is a perspective view of hardware components such as stalks located around the driving wheel of a vehicle according to an example.
**FIG. 4** is a view of other hardware components such as freewheel and switches located in a cabin of a vehicle to control a climate system according to an example.
**FIG. 5** is a view of a software component in a cabin of a vehicle to control a climate system according to an example.

### DETAILED DESCRIPTION

The detailed description set forth below provides information and examples of the disclosed technology with sufficient detail to enable those skilled in the art to practice the disclosure.

The disclosure relates to providing a method 200 to provide an economic mode adapted to a driver in a vehicle. The method relies on monitoring and determining how the driver interfaces or functionalities are used by the driver, depending on environmental conditions such as: the type of the road, the time of the day, the temperature, the location, the vehicle speed, etc....

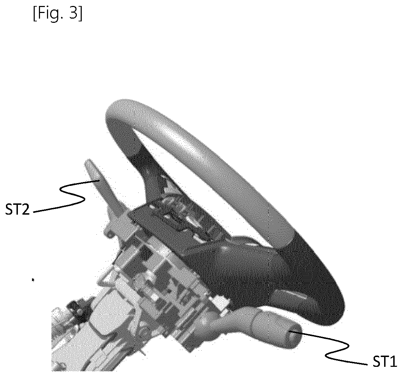

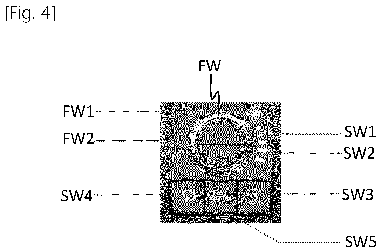

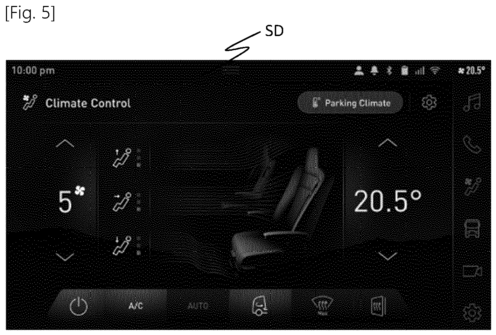

The driver has access to many different functions or services provided in the vehicle, through many different components, most of them accessible by the driver in the cabin close to the driving wheel, such as rotary switches, i.e. freewheels, button switches, or stalks. Figure 3 illustrates two stalks examples ST1, ST2, located around the steering wheel, which may be used by the driver to activate turn indicators, or headlights. Figure 4 further illustrates one freewheel FW and different switches respectively designed to set the climate system settings, such as the fan speed which can be increased or decreased by turning the fan speed freewheel FW clockwise FW1 or counterclockwise FW2, or the temperature setting which can be increased or decreased by pressing respectively a first switch SW1, or a second switch SW2, or a windshield defrost mode which can be switched on by pressing a third switch SW3, or an air recycling mode which can be switched on by pressing a fourth switch SW4, and finally an automatic mode for configuring the climate system settings, which can be switched on by pressing a fifth switch SW5. Some functions or services may be activated through different interfaces, either hardware components such as freewheels FW, switches SW1, SW2, ... SW5, or stalks ST1, ST2, or software applications which may be implemented for example on a secondary display SD, such as an interactive screen, as illustrated by figure 5 presenting a second climate settings interface, based on a software application displaying virtual switches on the interactive screen SD.

The components may be in an activated mode, wherein the result of an action of the driver on the component is the setting of a parameter to control a specific service to be provided in the vehicle, for example setting a conservation temperature in the cabin to control the climate system, or setting the turn signal to indicate a right or a left turn of the vehicle.

Most components in activated mode are energy consuming, and an action of the driver on the component may also result in an increase of energy consumption.

The components may also be commuted to an inactivated mode, wherein an action of the driver on the component has no effect. Energy consumption due to the component is reduced, or even canceled, when the component is in the inactivated mode.

The method 200 is based on monitoring 201, by a computer system 100 embedded on the vehicle and connected, for example through some automotive network communication protocol, to the different components which are designed to be actioned by the driver to obtain a specific service.

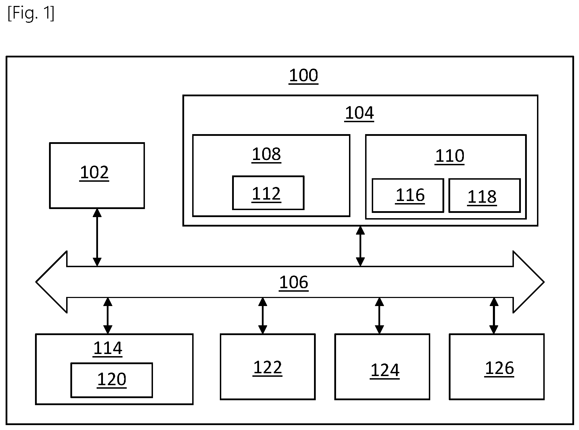

Figure 1 is a schematic diagram of a computer system 100 for implementing examples disclosed herein. Computer system 100 is adapted to execute instructions from a computer-readable medium to perform these and/or any of the functions or processing described herein. The computer system 100 may be connected (e.g., networked) to other machines in a LAN (Local Area Network), LIN (Local Interconnect Network), automotive network communication protocol (e.g., FlexRay), an intranet, an extranet, or the Internet. While only a single device is illustrated, the computer system 100 may include any collection of devices that individually or jointly execute a set (or multiple sets) of instructions to perform any one or more of the methodologies discussed herein. Accordingly, any reference in the disclosure and/or claims to a computer system, computing system, computer device, computing device, control system, control unit, electronic control unit (ECU), processor device, processing circuitry, etc., includes reference to one or more such devices to individually or jointly execute a set (or multiple sets) of instructions to perform any one or more of the methodologies discussed herein. For example, control system may include a single control unit or a plurality of control units connected or otherwise communicatively coupled to each other, such that any performed function may be distributed between the control units as desired. Further, such devices may communicate with each other or other devices by various system architectures, such as directly or via a Controller Area Network (CAN) bus, etc.

The computer system 100 may comprise at least one computing device or electronic device capable of including firmware, hardware, and/or executing software instructions to implement the functionality described herein. The computer system 100 may include processing circuitry 102 (e.g., processing circuitry including one or more processor devices or control units), a memory 104, and a system bus 106. The computer system 100 may include at least one computing device having the processing circuitry 102. The system bus 106 provides an interface for system components including, but not limited to, the memory 104 and the processing circuitry 102. The processing circuitry 102 may include any number of hardware components for conducting data or signal processing or for executing computer code stored in memory 104. The processing circuitry 102 may, for example, include a general-purpose processor, an application specific processor, a Digital Signal Processor (DSP), an Application Specific Integrated Circuit (ASIC), a Field Programmable Gate Array (FPGA), a circuit containing processing components, a group of distributed processing components, a group of distributed computers configured for processing, or other programmable logic device, discrete gate or transistor logic, discrete hardware components, or any combination thereof designed to perform the functions described herein. Processing circuitry 102 may further include computer executable code that controls operation of the programmable device.

The system bus 106 may be any of several types of bus structures that may further interconnect to a memory bus (with or without a memory controller), a peripheral bus, and/or a local bus using any of a variety of bus architectures. The memory 104 may be one or more devices for storing data and/or computer code for completing or facilitating methods described herein. The memory 104 may include database components, object code components, script components, or other types of information structure for supporting the various activities herein. Any distributed or local memory device may be utilized with the systems and methods of this description. The memory 104 may be communicably connected to the processing circuitry 102 (e.g., via a circuit or any other wired, wireless, or network connection) and may include computer code for executing one or more processes described herein. The memory 104 may include non-volatile memory 108 (e.g., read-only memory (ROM), erasable programmable read-only memory (EPROM), electrically erasable programmable read-only memory (EEPROM), etc.), and volatile memory 110 (e.g., random-access memory (RAM)), or any other medium which can be used to carry or store desired program code in the form of machine-executable instructions or data structures and which can be accessed by a computer or other machine with processing circuitry 102. A basic input/output system (BIOS) 112 may be stored in the non-volatile memory 108 and can include the basic routines that help to transfer information between elements within the computer system 100.

The computer system 100 may further include or be coupled to a non-transitory computer-readable storage medium such as the storage device 114, which may comprise, for example, an internal or external hard disk drive (HDD) (e.g., enhanced integrated drive electronics (EIDE) or serial advanced technology attachment (SATA)), HDD (e.g., EIDE or SATA) for storage, flash memory, or the like. The storage device 114 and other drives associated with computer-readable media and computer-usable media may provide non-volatile storage of data, data structures, computer-executable instructions, and the like.

Computer-code which is hard or soft coded may be provided in the form of one or more modules. The module(s) can be implemented as software and/or hard-coded in circuitry to implement the functionality described herein in whole or in part. The modules may be stored in the storage device 114 and/or in the volatile memory 110, which may include an operating system 116 and/or one or more program modules 118. All or a portion of the examples disclosed herein may be implemented as a computer program 120 stored on a transitory or non-transitory computer-usable or computer-readable storage medium (e.g., single medium or multiple media), such as the storage device 114, which includes complex programming instructions (e.g., complex computer-readable program code) to cause the processing circuitry 102 to carry out actions described herein. Thus, the computer-readable program code of the computer program 120 can comprise software instructions for implementing the functionality of the examples described herein when executed by the processing circuitry 102. In some examples, the storage device 114 may be a computer program product (e.g., readable storage medium) storing the computer program 120 thereon, where at least a portion of a computer program 120 may be loadable (e.g., into a processor) for implementing the functionality of the examples described herein when executed by the processing circuitry 102. The processing circuitry 102 may serve as a controller or control system for the computer system 100 that is to implement the functionality described herein.

The computer system 100 may include an input device interface 122 configured to receive input and selections to be communicated to the computer system 100 when executing instructions, such as from a keyboard, mouse, touch-sensitive surface, etc. Such input devices may be connected to the processing circuitry 102 through the input device interface 122 coupled to the system bus 106 but can be connected through other interfaces, such as a parallel port, an Institute of Electrical and Electronic Engineers (IEEE) 1394 serial port, a Universal Serial Bus (USB) port, an IR interface, and the like. The computer system 100 may include an output device interface 124 configured to forward output, such as to a display, a video display unit (e.g., a liquid crystal display (LCD) or a cathode ray tube (CRT)). The computer system 100 may include a communications interface 126 suitable for communicating with a network as appropriate or desired.

The computer system 100 according to an example of the disclosure will now be further disclosed. As was indicated above, the computer system 100 is configured to provide an economic mode, i.e. an ECO mode, adapted to a driver in a vehicle, to reduce energy consumption and save energy, based on the usage of the driver.

The computer system 100 comprises a processing circuitry 102 configured to monitor 201 actions of the driver on the components, hardware or software components, among the set of components which may be actioned by the driver in the vehicle.

As indicated above, the action on a component is directed to control a service to be provided in the vehicle when said at least one component is in an activated mode, and has no effect when said component is in an inactivated mode.

The processing circuitry 102 is further configured to activate 203 the ECO mode wherein the component is in the inactivated mode, based on determining 202 that the component is not actioned by the driver in at least one external condition, and that the at least one component in activated mode is energy consuming.

According to these dispositions, when the ECO mode is activated, even if the driver tries to action the component, it will have no effect on the service associated with the component, and the energy consumption will be reduced.

The external condition comprises for example one of a type of road, a time, a temperature out of the vehicle, a location of the vehicle, a speed of the vehicle.

The processing circuitry 102 may be further configured to continuously monitor 201 actions of the driver on the components that may be actioned by the driver in the vehicle, and to identify 204 a subset of components among said set of components.

A component is included in the identified subset of components if said component is not actioned by the driver in at least one external condition, and if said component in activated mode is energy consuming,

Said component included in the identified subset is inactivated when the ECO mode is activated.

The processing circuitry 102 may be further configured to associate 205 the identified subset to the driver; in other words, the identified subset is representative of a usual behavior of the driver, indicating which components of the components are not used by the driver, depending on some external conditions.

The processing circuitry 102 may be further configured to compare 206 a new identified subset associated to a new driver with at least one identified subset associated to at least one driver, to predict a predicted subset associated to the new driver, the predicted subset including components which will not be actioned in the future by the new driver in at least one external condition.

According to these dispositions, the processing circuitry 102 is configured to learn from the behavior of a population of drivers how the behavior of a new driver may change in the future, taking into account the new driver's behavior as continuously monitored by the processing circuitry 102.

For example, the method may result in a plurality of identified subsets associated with a population of different drivers and the prediction may be based on similarities between the identified subsets.

As an example, a driver may have two ways to adjust climate settings : through a screen SD, or through a hardware component, such as physical freewheel, and the system may identify that the driver never uses the hardware switch or freewheel. Climate freewheel may then be linked to the economic mode, i.e. ECO mode, so that when the ECO mode is activated, the climate freewheel is inactivated. During continuous monitoring of the processing circuitry 102; if the driver starts using the climate freewheel while ECO mode is not activated, the freewheel may be removed from identified subset of components associated with the driver.

This behavior may be compared with a large amount of drivers and similarities in usage may be found. Some drivers may never use defrost hardware button component when temperature is below 10 degrees. Based on the population data from the large amount of drivers, defrost button will be made available (activated) for the driver which is usually not using the hardware switch or freewheel, when the temperature is below 10 degrees.

Optionally, the processing circuitry 102 is further configured to deactivate 207 the ECO mode, so that the at least one component, or the components in the identified subset, are back in the activated mode.

According to an aspect of the disclosure, the disclosure relates to a vehicle comprising the computer system 100 as described above, and the set of components which may be actioned by the driver in the vehicle.

According to a further aspect of the disclosure, the disclosure relates to a computer-implemented method 200 configured to provide an economic mode, i.e. an ECO mode, adapted to a driver in a vehicle, the method 200 being implemented by the processing circuitry 102 of the computer system 100 described above.

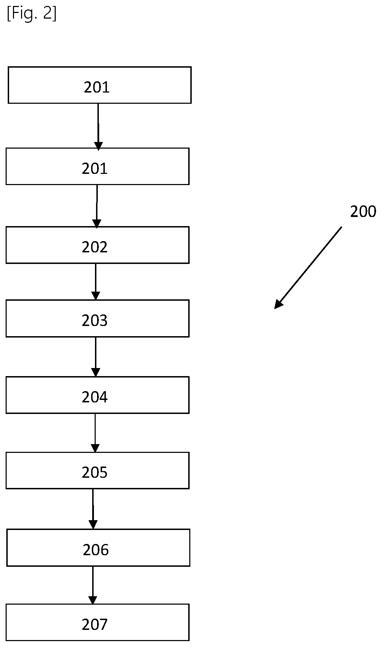

In reference with the flowchart of figure 2, the method 200 according to an example of the disclosure will now be further described.

The method 200 comprises :
- monitoring 201 an action of the driver on at least one component among a set of components which may be actioned by the driver in the vehicle, the action on the at least one component being directed to control a service to be provided in the vehicle when said at least one component is in an activated mode, and having no effect when said at least one component is in an inactivated mode,
- determining 202 that the at least one component is not actioned by the driver in at least one external condition, and that the at least one component in activated mode is energy consuming,
- implementing 203 the ECO mode by setting the at least one component in the inactivated mode.

Optionally, the method 200 further comprises identifying 204 a subset of components among said set of components, a component being included in the identified subset of components if said component is not actioned by the driver in at least one external condition, and if said component in activated mode is energy consuming, said component included in the identified subset being inactivated, when the ECO mode is activated.

Optionally, the method 200 further comprises :
- associating (205) the identified subset to the driver,
- comparing (206) a new identified subset associated to a new driver with at least one identified subset associated to at least one driver, to predict a predicted subset associated to the new driver, the predicted subset including components which will not be actioned in the future by the new driver in at least one external condition.

For example, the at least one identified subset associated to at least one driver comprises at least two identified subsets and wherein the prediction is based on similarities between the at least two identified subsets.

Optionally, the method 200 further comprises deactivating 207 the ECO mode, so that the at least one component, or the components in the identified subset, are in the activated mode.

According to another aspect, the disclosure relates to a computer program product comprising program code for performing, when executed by the processing circuitry, the method 200 according to any of the examples described above.

According to another aspect, the disclosure relates to a non-transitory computer-readable storage medium comprising instructions, which when executed by the processing circuitry, causes the processing circuitry to perform the method 200 according to any of the examples described above.

The operational actions described in any of the exemplary aspects herein are described to provide examples and discussion. The actions may be performed by hardware components, may be embodied in machine-executable instructions to cause a processor to perform the actions, or may be performed by a combination of hardware and software. Although a specific order of method actions may be shown or described, the order of the actions may differ. In addition, two or more actions may be performed concurrently or with partial concurrence.

The terminology used herein is for the purpose of describing particular aspects only and is not intended to be limiting of the disclosure. As used herein, the singular forms "a," "an," and "the" are intended to include the plural forms as well, unless the context clearly indicates otherwise. As used herein, the term "and/or" includes any and all combinations of one or more of the associated listed items. It will be further understood that the terms "comprises," "comprising," "includes," and/or "including" when used herein specify the presence of stated features, integers, actions, steps, operations, elements, and/or components, but do not preclude the presence or addition of one or more other features, integers, actions, steps, operations, elements, components, and/or groups thereof.

It will be understood that, although the terms first, second, etc., may be used herein to describe various elements, these elements should not be limited by these terms. These terms are only used to distinguish one element from another. For example, a first element could be termed a second element, and, similarly, a second element could be termed a first element without departing from the scope of the present disclosure.

Relative terms such as "below" or "above" or "upper" or "lower" or "horizontal" or "vertical" may be used herein to describe a relationship of one element to another element as illustrated in the Figures. It will be understood that these terms and those discussed above are intended to encompass different orientations of the device in addition to the orientation depicted in the Figures. It will be understood that when an element is referred to as being "connected" or "coupled" to another element, it can be directly connected or coupled to the other element, or intervening elements may be present. In contrast, when an element is referred to as being "directly connected" or "directly coupled" to another element, there are no intervening elements present.

Unless otherwise defined, all terms (including technical and scientific terms) used herein have the same meaning as commonly understood by one of ordinary skill in the art to which this disclosure belongs. It will be further understood that terms used herein should be interpreted as having a meaning consistent with their meaning in the context of this specification and the relevant art and will not be interpreted in an idealized or overly formal sense unless expressly so defined herein.

It is to be understood that the present disclosure is not limited to the aspects described above and illustrated in the drawings; rather, the skilled person will recognize that many changes and modifications may be made within the scope of the present disclosure and appended claims. In the drawings and specification, there have been disclosed aspects for purposes of illustration only and not for purposes of limitation, the scope of the disclosure being set forth in the following claims.

## Claims

1. A computer system (100) configured to provide an economic mode, i.e. an ECO mode, adapted to a driver in a vehicle, the computer system (100) comprising processing circuitry (102) configured to monitor (201) an action of the driver on at least one component among a set of components which may be actioned by the driver in the vehicle, the action on the at least one component being directed to control a service to be provided in the vehicle when said at least one component is in an activated mode, and having no effect when said at least one component is in an inactivated mode, the processing circuitry (102) being further configured to activate (203) the ECO mode wherein the at least one component in the inactivated mode, based on determining (202) that the at least one component is not actioned by the driver in at least one external condition, and that the at least one component in activated mode is energy consuming.

2. The computer system (100) of claim 1, wherein the external condition comprises one of a type of road, a time, a temperature out of the vehicle, a location of the vehicle, a speed of the vehicle.

3. The computer system (100) of any of claims 1 or 2, wherein the processing circuitry (102) is further configured to continuously monitor (201) actions of the driver on the at least one component and to identify (204) a subset of components among said set of components, a component being included in the identified subset of components if said component is not actioned by the driver in at least one external condition, and if said component in activated mode is energy consuming, said component included in the identified subset being inactivated, when the ECO mode is activated.

4. The computer system (100) claim 3, wherein the processing circuitry (102) is further configured to associate (205) the identified subset to the driver, and to compare (206) a new identified subset associated to a new driver with at least one identified subset associated to at least one driver, to predict a predicted subset associated to the new driver, the predicted subset including components which will not be actioned in the future by the new driver in at least one external condition.

5. The computer system (100) of claim 4, wherein the at least one identified subset associated to at least one driver comprises at least two identified subsets and wherein the prediction is based on similarities between the at least two identified subsets.

6. The computer system (100) of any of claims 1-5, wherein the processing circuitry (102) is further configured to deactivate (207) the ECO mode, so that the at least one component, or the components in the identified subset, are in the activated mode.

7. A vehicle comprising the computer system of any of claims 1-6, and the set of components which may be actioned by the driver in the vehicle, the action on the at least one component being directed to control a service to be provided in the vehicle when said at least one component is in an activated mode, and having no effect when said at least one component is in an inactivated mode.

8. A vehicle of claim 7, wherein the at least one component is one of a hardware component and a software component.

9. A vehicle of claim 8, wherein the hardware component is one of a freewheel (FW), a switch (SW1, SW2, SW3, SW4, SW5), and a stalk (ST1, ST2).

10. A vehicle of claim 8 or 9, wherein the software component comprises an interactive application displaying virtual switches on an interactive screen (SD).

11. A computer-implemented method (200) configured to provide an economic mode, i.e. an ECO mode, adapted to a driver in a vehicle, the method (200) being implemented by a processing circuitry (102) of a computer system (100), and comprising:
- monitoring (201) an action of the driver on at least one component among a set of components which may be actioned by the driver in the vehicle, the action on the at least one component being directed to control a service to be provided in the vehicle when said at least one component is in an activated mode, and having no effect when said at least one component is in an inactivated mode,
- determining (202) that the at least one component is not actioned by the driver in at least one external condition, and that the at least one component in activated mode is energy consuming,
- implementing (203) the ECO mode by setting the at least one component in the inactivated mode.

12. The method (200) of claim 11, further comprising identifying (204) a subset of components among said set of components, a component being included in the identified subset of components if said component is not actioned by the driver in at least one external condition, and if said component in activated mode is energy consuming, said component included in the identified subset being inactivated, when the ECO mode is activated.

13. The method (200) of claim 12, further comprising:
- associating (205) the identified subset to the driver,
- comparing (206) a new identified subset associated to a new driver with at least one identified subset associated to at least one driver, to predict a predicted subset associated to the new driver, the predicted subset including components which will not be actioned in the future by the new driver in at least one external condition.

14. The method (200) of claim 13, wherein the at least one identified subset associated to at least one driver comprises at least two identified subsets and wherein the prediction is based on similarities between the at least two identified subsets.

15. The method (200) of any of claims 11-14, further comprising deactivating (207) the ECO mode, so that the at least one component, or the components in the identified subset, are in the activated mode.

16. A computer program product comprising program code for performing, when executed by the processing circuitry, the method (200) of any of claims 11-15.

17. A non-transitory computer-readable storage medium comprising instructions, which when executed by the processing circuitry, causes the processing circuitry to perform the method (200) of any of claims 11-15.
